# EUROPEAN PATENT APPLICATION

(11) **EP 2 923 878 A1**
(43) Date of publication of application: **30.09.2015**
(21) Application number: 14196359.5
(22) Date of filing: 04.12.2014
(51) Int. Cl.: B60L 9/28

(54) **Drive system**

(30) Priority: 28.03.2014 JP 2014067402
(71) Applicant: Hitachi, Ltd., Tokyo (JP)
(72) Inventor: Tachihara, Shuuichi, Chiyoda-ku, Tokyo 100-8280 (JP); Nozaki, Yuichiroh, Chiyoda-ku, Tokyo 100-8280 (JP); Ayata, Masataka, Chiyoda-ku, Tokyo 100-8280 (JP)
(74) Representative: Gill, Stephen Charles

(57) **Abstract**

Electromagnetic noises that accompany the operation of a converter device are decreased in the case where a railroad vehicle runs in the vicinity of a stopping station. If the speed of the vehicle becomes equal to or less than a first reference speed, the carrier frequency of the converter device is changed from a first reference frequency to a second reference frequency, and if the speed of the vehicle becomes equal to or larger than a second reference speed, the carrier frequency of the converter device is changed from the second reference frequency to the first reference frequency.

## Description

### BACKGROUND

The present invention relates to drive apparatuses, and more particularly to a railroad vehicle drive apparatus that drives railroad vehicles using electric power obtained from a single-phase AC overhead wiring.

In a railroad vehicle running in an AC feeding section, a method, in which AC power is received from a single-phase AC wiring via a transformer, DC power, which is obtained by converting the AC power using a converter device, is converted into three-phase AC power using an inverter device, and an AC motor is driven by the three-phase AC power, has been widely used.

The converter device and the inverter device perform on-off control on plural switching components on the basis of PWM (pulse width modulation) to make the values of the corresponding output voltages desired values.

Switching components included by the converter device need to have withstand voltages corresponding to a voltage at the DC side of the converter device respectively. For example, in the case of a railroad vehicle, the voltage at the DC side of the converter device ranges roughly from 1,800 V to 3,000 V depending on the specifications of an overhead wiring or the vehicle, and the higher the voltage at the DC side is, the higher the withstand voltages of the switching components need to be.

In order for a switching component of high withstand voltage to satisfy high withstand voltage specification, the thicknesses of semiconductor chips inside the switching component need to be thicker, and as a result, a loss accompanying the switching operations of the components of high withstand voltage becomes larger compared with that accompanying the switching operations of components of low withstand voltage. Therefore, it is desired that a converter device including switching components of high withstand voltage should lower its carrier frequency in order to suppress the loss that accompanies the switching operations of the switching components.

### SUMMARY

Generally, in a converter device, a secondary current flowing through the secondary side of the converter device is set to a sinusoidal wave current, and the carrier frequency of the converter device is set to the highest possible frequency as far as the cooling capacity of the converter device allows in order to decrease harmonic currents flowing through an overhead wiring. However, in the case where switching components of high withstand voltage are used as mentioned above, it is required that the carrier frequency of the converter device should be lowered in order to suppress a loss accompanying the operations of the switching components. On the other hand, if the carrier frequency is lowered, not only the harmonic components of the secondary current increase, and the harmonic currents flowing through the overhead wiring increase, but also electromagnetic noises are generated by a transformer and an AC motor.

Particularly, in the case of a railroad vehicle, because currents input into or output from the vehicle are small just before the vehicle stops at a railroad station, or just after the vehicle leaves the railroad station, the percentage of harmonic components generated by switching operations to the fundamental component of a transformer current increases. As a result, there occurs a problem in that electromagnetic noises generated by the transformer increase and induce noises in the vicinity of the railroad station.

In order to solve the above problem, the configuration of a drive system described in the appended claims is adopted, for example. The present invention includes plural procedures to solve the above problem. To give an example, a drive system for a vehicle, which includes: a converter device that converts single-phase AC power into DC power via a transformer; an inverter device that is coupled to the converter via a filter capacitor and converts the DC power, which is obtained by the converter device's converting the single-phase AC power, into a three-phase AC power; and an AC motor that is driven by the three-phase AC power obtained by the inverter device's converting the DC power, can be thought of. In addition, in the drive system, at least one, and preferably both, of the following two procedures is executed. One of the two procedures is a procedure to change the carrier frequency of the converter device from a first reference frequency to a second reference frequency if the running speed of the vehicle becomes equal to or less than a first reference speed, and the other of the two procedures is a procedure to change the carrier frequency of the converter device from the second reference frequency to the first reference frequency if the running speed of the vehicle becomes equal to or larger than a second reference speed.

According to the present invention, the percentage of the harmonic components of a current flowing through a transformer to the fundamental component of the current can be decreased, and electromagnetic noises in the vicinity of a railroad station can be decreased.

### BRIEF DESCRIPTION OF THE DRWAINGS

Fig. 1 is a diagram showing the configuration example of a drive apparatus for a railroad vehicle.
Fig. 2 is a diagram showing the relation between the running position of the vehicle and the carrier frequency of a converter device and the relation between the running position of the vehicle and the speed of the vehicle.
Fig. 3 is a diagram showing the relation between the running time of the vehicle and the carrier frequency of the converter device and the relation between the running time of the vehicle and the speed of the vehicle.
Fig. 4 is a diagram showing the relation between the running position of the vehicle and the carrier frequency of the converter device, the relation between the running position of the vehicle and the secondary current of the converter device, and the relation between the running position of the vehicle and the speed of the vehicle.
Fig. 5 is a diagram showing the relation between the running time of the vehicle and the carrier frequency of the converter device, the relation between the running time of the vehicle and the secondary current of the converter device, and the relation between the running time of the vehicle and the speed of the vehicle.

### DETAILED DESCRIPTION

Hereinafter, embodiments according to the present invention will be explained.

### First Embodiment

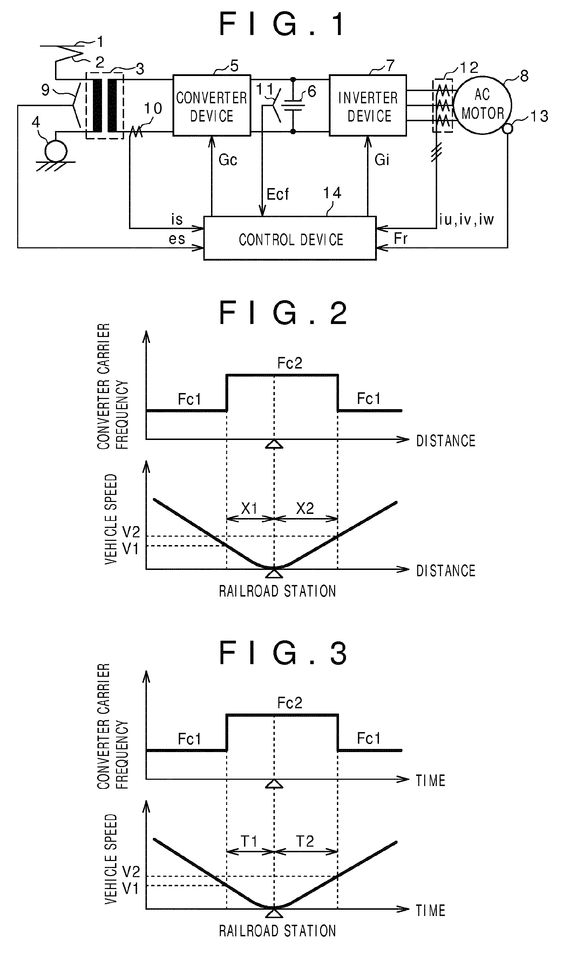

A first embodiment in the case of a drive apparatus according to the present invention applied to a railroad vehicle will be explained with reference to Fig. 1 to Fig. 3.

Fig. 1 shows the configuration example of a drive apparatus for a railroad vehicle. A transformer 3 is coupled to an AC overhead wiring 1 via a pantograph 2, and the transformer 3 provides AC power to a converter device 5. One terminal of the transformer 3 is coupled to a rail via a wheel 4. The converter device 5 converts the AC power obtained from the transformer 3 into DC power. The DC side of the converter device 5 is coupled to an inverter device 7 via a capacitor 6 used for stabilizing the DC voltage at the DC side of the converter 5. The inverter device 7 converts the DC power output from the converter device 5 into three-phase AC power, and drives an AC motor 8 using the three-phase AC power.

A first voltage detection portion 9 detects a voltage that is applied to the transformer 3 by the AC overhead wiring 1, and outputs a secondary voltage es after translating the detected voltage into the secondary voltage es on the basis of the winding ratio of the transformer 3. A first current detection portion 10 detects a secondary current is that flows through the AC side of the converter device 5, and outputs the detected secondary current is.

A second voltage detection portion 11 detects a DC stage voltage Ecf, which is a voltage between both ends of the capacitor 6, and outputs the detected DC stage voltage Ecf. A second current detection portion 12 detects three-phase AC currents iu, iv, and iw, and outputs the detected three-phase AC signal. A speed detection portion 13 detects the rotation speed Fr of the AC motor 8 and outputs the detected rotation speed Fr.

A control device 14 is a device that makes the converter device 5 operate so that a voltage at the DC side of the converter device 5 becomes a predefined value, and at the same time, makes the inverter device 7 operate so that the torque of the AC motor 8 becomes a predefined value, and issues gate commands Gc and Gi that make switching components included in the converter device 5 and the inverter device 7 operate respectively on the basis of the secondary voltage es, the secondary current is, the DC stage voltage Ecf, the currents iu, iv, and iw, and the rotation speed Fr.

Fig. 2 is a diagram showing the relation between the running distance and the carrier frequency of the converter device and the relation between the running distance and the speed of the vehicle. Fig. 2 shows the operation of the vehicle in which the vehicle leaves a stopping station and accelerates its speed after decelerating its speed and stopping at the stopping station.

In the present invention, as shown in Fig. 2, when the speed of the vehicle becomes equal to or less than a first reference speed V1, the carrier frequency of the converter device is raised from a first carrier frequency Fc1 to a second carrier frequency Fc2. Generally speaking, because the carrier frequency of a converter device used in a railroad vehicle is set to a frequency obtained by multiplying the frequency of an overhead wiring voltage by an odd number, both Fc1 and Fc2 are respectively set to frequencies obtained by multiplying the frequency of the voltage of the AC overhead wiring 1 by an odd number.

Although the higher the second carrier frequency Fc2 is, the better it is, a loss generated by the converter device increases when the carrier frequency becomes high. In the case where the vehicle decelerates its speed as the vehicle approaches the stopping station, the secondary current of the converter device decreases along with the decrease of the speed of the vehicle. Therefore, the first reference speed V1 is set so that the loss, which is generated when the converter device is operated at the second carrier frequency Fc2, does not exceed the cooling capacity of the converter device.

In addition, in the case where an auxiliary power supply for feeding power to illumination or air-conditioning in the vehicle is installed at the DC side of the converter device, it is necessary to set the second carrier frequency Fc2 in consideration of a secondary current of power consumed by the auxiliary power supply.

Whether the speed of the vehicle is equal to or less than the first reference speed V1 or not is judged by calculating the speed of the vehicle on the basis of the rotation speed Fr of the AC motor 8 obtained from the speed detection portion 13, or it is judged by knowing that the distance between the vehicle and the stopping station becomes less than a first reference distance X1 on the basis of the running position of the vehicle obtained from track information, a GPS, and the like.

At the time when the speed of the vehicle becomes equal to or larger than a second reference speed V2 after the vehicle leaves the station, the carrier frequency of the converter device is lowered from the second carrier frequency Fc2 to the first carrier frequency Fc1.

In the case where the vehicle is accelerated after leaving the stopping station, the secondary current of the converter device increases along with the increase of the speed of the vehicle. Therefore, the second reference speed V2 is set so that the loss, which is generated when the converter device is operated at the second carrier frequency Fc2, does not exceed the cooling capacity of the converter device.

Whether the speed of the vehicle is equal to or larger than the second reference speed V2 or not is judged by calculating the speed of the vehicle on the basis of the rotation speed Fr of the AC motor 8 obtained from the speed detection portion 13, or it is judged by knowing that the distance between the vehicle and the stopping station becomes larger than a second reference distance X2 on the basis of the running position of the vehicle obtained from the track information, the GPS, and the like.

Although Fig. 2 shows the relation between the distance to the stopping station and the speed of the vehicle, because the travel diagram of the railroad vehicle has been determined in advance, it is conceivable, as shown in Fig. 3, that, when a time period to the arrival time at the stopping station becomes shorter than a first reference time period T1, the carrier frequency of the converter device is raised to Fc2, and that, when a time period after the start time from the stopping station becomes longer than a second reference time period T2, the carrier frequency of the converter device is lowered to Fc1 instead of using the first reference distance X1 and the second reference distance X2.

As described above, by increasing the carrier frequency of the converter device during a time period between a time when the vehicle approaches the stopping station and a time when the vehicle leaves the stopping station, the ratio of the harmonic components of the current flowing through the transformer to the fundamental component can be decreased. As a result, electromagnetic noises generated by the transformer can be suppressed, and tranquil circumstances can be realized in the vicinity of the platform of the station where a lot of people gather.

In addition, because the present invention brings about an advantageous effect that the power factor in the vicinity of the stopping station is improved and the reactive power is also decreased, a loss generated at the transformer can be decreased and the transformer can be downsized. Particularly, in the case of a railroad vehicle, because the speed of the vehicle is small, and currents that are input into or output from the vehicle are small just before the vehicle stops at a railroad station, or just after the vehicle lefts the railroad station, the loss accompanying the switching operation of a converter device is smaller than that generated when the speed of the vehicle is large. Therefore, as long as the speed of the vehicle is small, electromagnetic noises generated at a transformer can be decreased by increasing the carrier frequency of the converter device.

Although the first embodiment has been described about the case where a railroad vehicle stops at a railroad station, the same advantageous effect as above can be obtained even in the case where the railroad vehicle stops at positions other than the railroad station. In addition, not only in the case where a railroad vehicle stops at a station and leaves the station, but also either in the case where the railroad vehicle stops at the station or in the case where the railroad vehicle leaves the station, the advantageous effect of the present invention can be obtained in a similar way by controlling the carrier frequency of the converter device.

Further, as a power collection means, other power feeding means such as a third rail can be used instead of a pantograph, and the present invention can be applied not only to the railroad vehicle, but also to a mobile object, on which the converter device is mounted, and that stops at a predefined position or leaves the predefined position, resulting in a similar advantageous effect.

### Second Embodiment

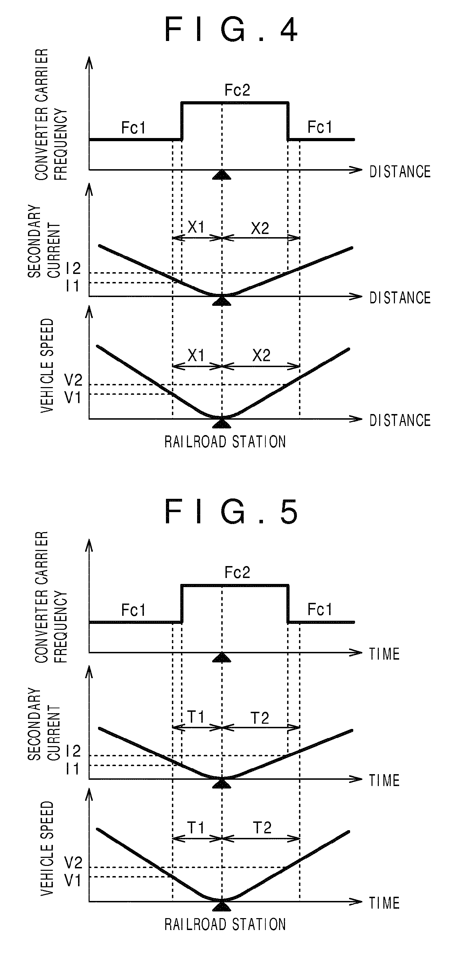

A second embodiment about a drive apparatus of a railroad vehicle according to the present invention will be explained with reference to Fig. 4 and Fig. 5. The second embodiment has a point different from the first embodiment in that the secondary current of a converter device, as well as the speed of the vehicle, is used as a condition for changing the carrier frequency of the converter device.

Fig. 4 is a diagram showing the relation between the running distance and the carrier frequency of the converter device, the relation between the running distance and the secondary current, and the relation between the running distance and the speed of the vehicle. Fig. 4 shows the operation of the vehicle in which the vehicle leaves a stopping station and accelerates its speed after decelerating its speed and stopping at the stopping station.

In the present invention, as shown in Fig. 4, at the time when the speed of the vehicle becomes equal to or less than a first reference speed V1 and the secondary current of the converter device becomes equal to or less than a first reference current I1, the carrier frequency of the converter device is raised from a first carrier frequency Fc1 to a second carrier frequency Fc2. Generally speaking, because the carrier frequency of the converter device used in a railroad vehicle is set to a frequency obtained by multiplying the frequency of an overhead wiring voltage by an odd number, both Fc1 and Fc2 are respectively set to frequencies obtained by multiplying the frequency of the voltage of the AC overhead wiring of this embodiment by odd numbers.

Although the higher the second carrier frequency Fc2 is, the better it is, a loss generated by the converter device increases when the carrier frequency becomes high. In the case where the vehicle decelerates its speed as the vehicle approaches the stopping station, the secondary current of the converter device decreases along with the decrease of the speed of the vehicle. Therefore, the first reference speed V1 is set so that the loss, which is generated when the converter device is operated at the second carrier frequency Fc2, does not exceed the cooling capacity of the converter device.

In addition, in the case where an auxiliary power supply for feeding power to illumination or air-conditioning in the vehicle is installed at the DC side of the converter device, the second carrier frequency Fc2 is set in consideration of a secondary current of power consumed by the auxiliary power supply.

In addition, if the carrier frequency of the converter device is changed only by comparing the speed of the vehicle and the first reference speed V1, there is a possibility that the loss, which is generated by the converter device, exceeds the cooling capacity of the converter device depending on various deriving operations or the operation condition of the auxiliary power supply. Therefore, the first reference current I1 is set so that the loss, which is generated when the converter device is operated at the second carrier frequency Fc2, does not exceed the cooling capacity of the converter device.

As described above, by judging whether the carrier frequency should be raised or not on the basis of the speed of the vehicle and the secondary current, the loss, which is generated by the converter device when the carrier frequency is raised to Fc2, can be prevented from exceeding the allowable value even when the secondary current at the speed of the vehicle V1 becomes larger than expected owing to various driving operations.

Whether the speed of the vehicle is equal to or less than the first reference speed V1 or not is judged by calculating the speed of the vehicle on the basis of the rotation speed Fr of an AC motor 8 obtained from a speed detection portion 13, or it is judged by knowing that the distance between the vehicle and the stopping station becomes less than a first reference distance X1 on the basis of the running position of the vehicle obtained from track information, a GPS, and the like.

At the time when the speed of the vehicle becomes equal to or larger than a second reference speed V2 or the secondary current of the converter device becomes equal to or larger than a second reference current 12 after the vehicle leaves the station after stopping at the station, the carrier frequency of the converter device is lowered from the second carrier frequency Fc2 to the first carrier frequency Fc1.

In the case where the vehicle is accelerated after leaving the stopping station, the secondary current of the converter device increases along with the increase of the speed of the vehicle. Therefore, the second reference speed V2 is set so that the loss, which is generated when the converter device is operated at the second carrier frequency Fc2, does not exceed the cooling capacity of the converter device.

In addition, as is the case with the first reference current I1, the second reference current 12 is set so that the loss, which is generated when the converter device is operated at the second carrier frequency Fc2, does not exceed the cooling capacity of the converter device.

As described above, by judging whether the carrier frequency should be lowered or not on the basis of the speed of the vehicle and the secondary current, the loss, which is generated by the converter device when the carrier frequency is raised to Fc2, can be prevented from exceeding the allowable value as is the case where the vehicle decelerates its speed as the vehicle approaches the stopping station.

Whether the speed of the vehicle is equal to or larger than the second reference speed V2 or not is judged by calculating the speed of the vehicle on the basis of the rotation speed Fr of the AC motor 8 obtained from the speed detection portion 13, or it is judged by knowing that the distance between the vehicle and the stopping station becomes larger than a second reference distance X2 on the basis of the running position of the vehicle obtained from the track information, the GPS, and the like.

Although Fig. 4 shows the relation between the distance to the stopping station and the speed of the vehicle, because the travel diagram of the railroad vehicle has been determined in advance, it is conceivable, as shown in Fig. 5, that, when a time period to the arrival time at the stopping station becomes shorter than a first reference time period T1, the carrier frequency of the converter device is raised to Fc2, and that, when a time period after the start time from the stopping station becomes longer than a second reference time period T2, the carrier frequency of the converter device is lowered to Fc1 instead of using the first reference distance X1 and the second reference distance X2.

Further, although the secondary current flowing through the AC side of the converter device is used for changing the carrier frequency in the second embodiment, the current flowing through the DC side of the converter device can be used for the same purpose as well.

As described above, by increasing the carrier frequency of the converter device during a time period between a time when the vehicle approaches the stopping station and a time when the vehicle leaves the stopping station, the ratio of the harmonic components of the current flowing through the transformer to the fundamental component can be decreased. As a result, electromagnetic noises generated by the transformer can be suppressed, and tranquil circumstances can be realized in the vicinity of the platform of the station where a lot of people gather.

In addition, because the present invention brings about an advantageous effect that the power factor in the vicinity of the stopping station is improved and the reactive power is also decreased, a loss generated at the transformer can be decreased and the transformer can be downsized.

Further, by using a combination of the running position of the vehicle, the distance to the stopping station, and the magnitude of the secondary current of the converter device as a condition for changing the carrier frequency, the loss, which is generated by the converter device when the carrier frequency is raised, can be prevented from exceeding the cooling capacity of the converter device owing to various driving operations and the like.

Further, in the second embodiment, as is the case with the first embodiment, the same advantageous effect as above can be obtained even in the case where the railroad vehicle stops at positions other than the railroad station.

## Claims

1. A drive system for a vehicle, comprising:
a converter device that converts single-phase AC power into DC power via a transformer;
an inverter device that is coupled to the converter via a filter capacitor and converts the DC power, which is obtained by the converter device's converting the single-phase AC power, into three-phase AC power; and
an AC motor that is driven by the three-phase AC power obtained by the inverter device's converting the DC power,
wherein the system implements at least one of the following two procedures:
a first procedure being a procedure to change the carrier frequency of the converter device from a first reference frequency to a second reference frequency if the running speed of the vehicle becomes equal to or less than a first reference speed; and
a second procedure being a procedure to change the carrier frequency of the converter device from the second reference frequency to the first reference frequency if the running speed of the vehicle becomes equal to or larger than a second reference speed.

2. The drive system according to claim 1,
wherein according to the first procedure the carrier frequency is changed from the first reference frequency to the second reference frequency if a current at the AC side or a current at the DC side of the converter device becomes equal to or less than a first reference current and the running speed of the vehicle becomes equal to or less than the first reference speed; and
according to the second procedure the carrier frequency is changed from the second reference frequency to the first reference frequency if the current at the AC side or the current at the DC side of the converter device becomes equal to or larger than a second reference current or if the running speed of the vehicle becomes equal to or larger than the second reference speed.

3. The drive system according to claim 1 or claim 2,
wherein according to the first procedure it is judged that a distance to a stopping position becomes equal to or less than a first reference distance if the running speed of the vehicle becomes equal to or less than the first reference speed; and
according to the second procedure it is judged that the distance to the stopping position becomes equal to or larger than a second reference distance if the running speed of the vehicle becomes equal to or larger than the second reference speed.

4. The drive system according to claim 3,
wherein according to the first procedure it is judged that the running speed of the vehicle becomes equal to or less than the first reference speed on the basis of the relation between the stopping position and the running position of the vehicle obtained from the track data of the vehicle when the distance between the stopping position and the running position of the vehicle becomes equal to or less than the first reference distance; and
according to the second procedure it is judged that the running speed of the vehicle becomes equal to or larger than the second reference speed when the distance between the stopping position and the running position of the vehicle becomes equal to or larger than the second reference distance.

5. The drive system according to claim 3,
wherein according to the first procedure it is judged that the running speed of the vehicle becomes equal to or less than the first reference speed on the basis of the arrival time at which the vehicle arrives at the stopping position and the current time when a time period required for the vehicle to arrive at the stopping position becomes equal to or less than a first reference time period; and
according to the second procedure it is judged that the running speed of the vehicle becomes equal to or larger than the second reference speed when a time period that elapses since the vehicle starts from the stopping position becomes equal to or larger than a second reference time period.

6. The drive system according to any of claim 1 to claim 5,
wherein the second reference frequency is higher than the first reference frequency.

7. The drive system according to any of claim 1 to claim 6,
wherein the first reference frequency and the second reference frequency are frequencies obtained by multiplying the frequency of the fundamental voltage of the single-phase AC power by odd numbers.

8. The drive system according to any of claim 1 to claim 7,
wherein the first reference frequency is set in such a way that a loss, which is generated when the converter device is driven by the first reference frequency, does not exceed the cooling capacity of the converter device; and
the second reference frequency is set in such a way that a loss, which is generated when the converter device is driven by the second reference frequency, does not exceed the cooling capacity of the converter device.

9. A railroad vehicle having the drive system of any of claim 1 to claim 8.

10. A method of operating the railroad vehicle of claim 9, the method including
running the railroad vehicle so that its running speed becomes equal to or less than the first reference speed, and the carrier frequency is changed from the first reference frequency to the second reference frequency according to the first procedure;
subsequently stopping the railroad vehicle at a railroad station;
continuing the carrier frequency at the second reference frequency while the railroad vehicle is waiting at the station; and
running the railroad vehicle so that its running speed becomes equal to or larger than the second reference speed after the railroad vehicle leaves the station, and the carrier frequency is changed from the second reference frequency to the first reference frequency according to the second procedure.
